# FASCICULE DE BREVET EUROPEEN

(11) **EP 0 658 152 B1**
(45) Date de publication et mention de la délivrance du brevet: **29.12.1997**
(21) Numéro de dépôt: 94921000.9
(22) Date de dépôt: 30.06.1994
(51) Int. Cl.: C04B 40/02, C04B 28/18

(54) **PROCEDE ET COMPOSITION POUR FABRIQUER DES ELEMENTS EN BETON AYANT UNE RESISTANCE A LA COMPRESSION ET UNE ENERGIE DE FRACTURATION REMARQUABLES ET ELEMENTS AINSI OBTENUS**
VERFAHREN UND ZUSAMMENSETZUNG ZUR HERSTELLUNG VON BETONELEMENTEN MIT HOHEN DRUCKFESTIGKEIT UND HOHER BRUCKENERGIE, SOWIE AUF DIESE WEISE HERGESTELLTE BAUELEMENTE
METHOD AND COMPOSITION FOR FABRICATING CONCRETE ELEMENTS HAVING REMARKABLE COMPRESSION RESISTANCE AND FRACTURATION ENERGY, AND ELEMENTS THUS OBTAINED

(30) Priorité: 01.07.1993 FR 9308062; 10.03.1994 FR 9402800
(43) Date de publication de la demande: 21.06.1995
(73) Titulaire: BOUYGUES, F-78190 Saint-Quentin en Yvelines (FR)
(72) Inventeur: RICHARD, Pierre,Emile, Félix, F-92200 Neuilly-sur-Seine (FR); CHEYREZY, Marcel, Hubert, F-92310 Sèvres (FR); DUGAT, Jérôme, Antoine, F-78180 Montigny-le-Bretonneux (FR)
(74) Mandataire: Schrimpf, Robert
(86) Numéro de dépôt international: FR9400798
(87) Numéro de publication internationale: WO9501317

(56) Documents cités:
- EP-A- 0 033 522
- EP-A- 0 273 181
- DATABASE WPI Section Ch, Week 8401, Derwent Publications Ltd., London, GB; Class L02, AN 84-003530 & JP,A,58 199 758 (SUMITOMO CEMENT KK) 21 Novembre 1983
- DATABASE WPI Section Ch, Week 8314, Derwent Publications Ltd., London, GB; Class E33, AN 83-33052K & JP,A,58 032 012 (MITSUBISHI CHEM IND KK) 24 Février 1983

## Description

L'invention concerne la préparation d'éléments en béton ayant une résistance à la compression d'au moins 400 MPa et une énergie de fracturation d'au moins 1 000 J/m2, préfabriqués ou coulés in-situ.

Selon l'invention, pour obtenir un tel béton,
- on malaxe un mélange comportant les proportions suivantes, exprimées en parties en poids (p) :
   a) 100 p de ciment Portland,
   b) 30 à 100 p, ou mieux 40 à 70 p, de sable fin ayant une grosseur de grains d'au moins 150 micromètres,
   c) 10 à 40 p, ou mieux 20 à 30 p, de silice amorphe ayant une grosseur de grains inférieure à 0,5 micromètres,
   d) 20 à 60 p, ou mieux 30 à 50 p, de quartz broyé ayant une grosseur de grains inférieure à 10 micromètres,
   e) 25 à 100 p, ou mieux 45 à 80 p, de laine d'acier,
   f) un fluidifiant,
   g) éventuellement d'autres adjuvants,
   h) 13 à 26 p, ou mieux 15 à 22 p, d'eau,
- et, après la prise du mélange, on cure le béton à une température au moins égale à 250°C pendant une période de temps suffisante pour transformer les produits d'hydratation du ciment en hydrates cristallins de type xonotlite, de façon à éliminer la quasi-totalité de l'eau libre et au moins la majeure partie de l'eau absorbée et chimiquement liée.

L'utilisation de granulats de sable en particulier de sable siliceux, procure une adhérence élevée à l'interface granulats / pâte de ciment, de silice et d'eau.

Le document EP-A-273 181 décrit des compositions à base de ciment Portland, de fibres métalliques pouvant contenir des aggrégats et de silice finement divisée.

Il est connu de chauffer le béton en autoclave pour transformer les hydrates amorphes du béton de type [CaO SiO₂. H₂O], en un hydrate cristallin appelé tobermorite dont la formule est [CaO]₅ [SiO₂]₆, [H₂O]₅. mais cette technique ne constitue pas une solution satisfaisante au présent problème car la tobermorite comporte cinq fois plus d'eau que la xonotlite dont la formule est [CaO]₆ [SiO₂]₆ [H₂O]₁.

En outre, l'invention vise à fournir un procédé tel que la transformation du produit d'hydratation du ciment puisse être obtenu par un simple chauffage, dans les conditions ambiantes de pression et d'hygrométrie.

Dans un mode de réalisation particulier du procédé de l'invention, on prépare un béton de porosité cumulée inférieure à 0.01 cm3/gramme (telle que mesurée au porosimètre à mercure), contenant du quartz broyé et de la laine d'acier constituée de copeaux d'acier broyés et, après la prise, on soumet ce béton à une température d'au moins 250°C, de préférence d'au moins 400°C, dans les conditions ambiantes de pression et d'hygrométrie, pendant un temps suffisant pour obtenir et transformer des produits d'hydratation du ciment en hydrates cristallins de type xonotlite.

La vapeur d'eau dégagée au cours du chauffage reste confinée au coeur du béton en raison de la faible porosité de ce dernier ; le quartz broyé favorise la formation d'hydrates cristallins plus riches en CaO que les hydrates amorphes et les copeaux d'acier donnent à la matrice une résistance suffisante dans la phase transitoire pendant laquelle la pression de vapeur d'eau dans les pores est maximale.

Dans ces conditions, la vapeur d'eau emprisonnée réalise au sein du béton des conditions hydrothermales nécessaires à la transformation des hydrates amorphes ou semi-cristallins en cristaux de xonotlite.

La durée de la cure est généralement de plusieurs heures.

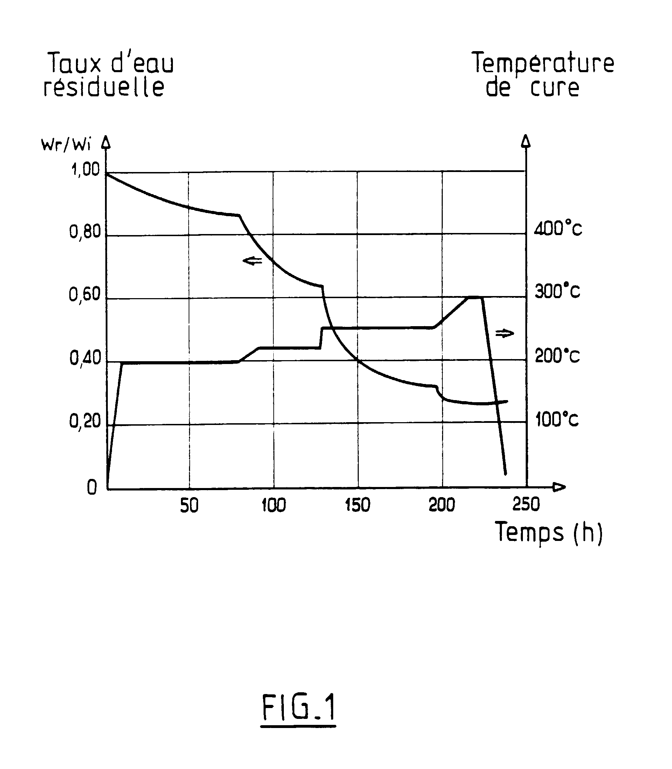

Un programme de cure typique est représenté sur la fig. 1. En pratique, on peut accélérer la cure en utilisant des températures plus élevées.

Dans des modes de réalisation préférée, le procédé de l'invention présente encore une ou plusieurs des caractéristiques suivantes :
- on incorpore au mélange 0,6, ou mieux au moins 1,4 p en poids d'un superplastifiant ;
- on utilise une laine d'acier constituée de copeaux d'acier broyés de 1 à 5 mm (taille de la grille de coupe au broyeur).
- on utilise un ciment Portland CPA, PMES ou HTS (haute teneur en silice),
- on utilise du sable fin ayant une grosseur de grain inférieure à 800 micromètres, de préférence dans la gamme 150 - 400 micromètres,
- on soumet le béton frais, pendant sa prise, à une pression de serrage d'au moins 5MPa ou mieux d'au moins 50 MPa.

Lorsqu'on ajoute au mélange des fibres métalliques cylindriques et lisses de diamètre inférieur à environ 500 micromètres, et de longueur comprise entre 4 et 20 mm, on améliore dans des proportions considérables la résistance en flexion et l'énergie de fracturation. On a pu ainsi obtenir une résistance en flexion de 141 MPa et une énergie de fracturation de 30 000 J/m².

Cette valeur est plus de 200 fois supérieure à celle obtenue pour les bétons traditionnels, et elle est plus de 15 fois supérieure à celle obtenue avec le béton selon l'invention, mais ne comportant pas de fibres métalliques. Cette valeur élevée de l'énergie de fracturation, confère au matériau une ductilité importante.

L'invention sera encore expliquée ci-après sur des exemples en référence aux figures du dessin joint sur lequel :
- la fig. 1 est un graphique d'un programme de cure thermique,
- la fig. 2 est une courbe du taux d'eau résiduelle d'un béton selon l'invention en fonction de la température de cure,

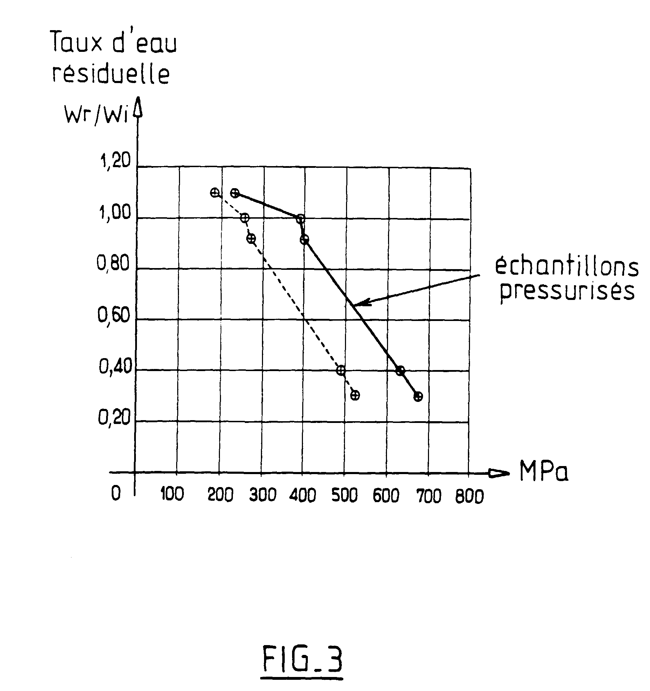

- la fig. 3 est une courbe de la résistance à la compression d'un béton selon l'invention en fonction du taux d'eau résiduelle,
- la fig. 4 est une micrographie par balayage électronique montrant la microstructure d'un béton selon l'invention, et
- la fig. 5 est une vue d'une tête d'ancrage de câbles de précontrainte obtenue selon l'invention.

### EXEMPLE 1

On prépare des échantillons de béton en malaxant un mélange contenant sensiblement, pour 100 p en poids de ciment Portland :
50 p. de sable fin (grosseur de grains 150 - 400 micromètres),
23 p. de silice amorphe (grosseur de grains inférieure à 0,5 micromètres),
39 p. de quartz broyé (grosseur de grains inférieure à 10 micromètres).
2p. de superplastiflant (extrait sec),
63p. de laine d'acier inoxydable AISI 430 broyée à 3 mm (taille de la grille de coupe au broyeur), commercialisée par la société GERVOIS,
18 p d'eau.

Le superplastifiant est par exemple de type polyacrylate, mélamine ou naphtalène.

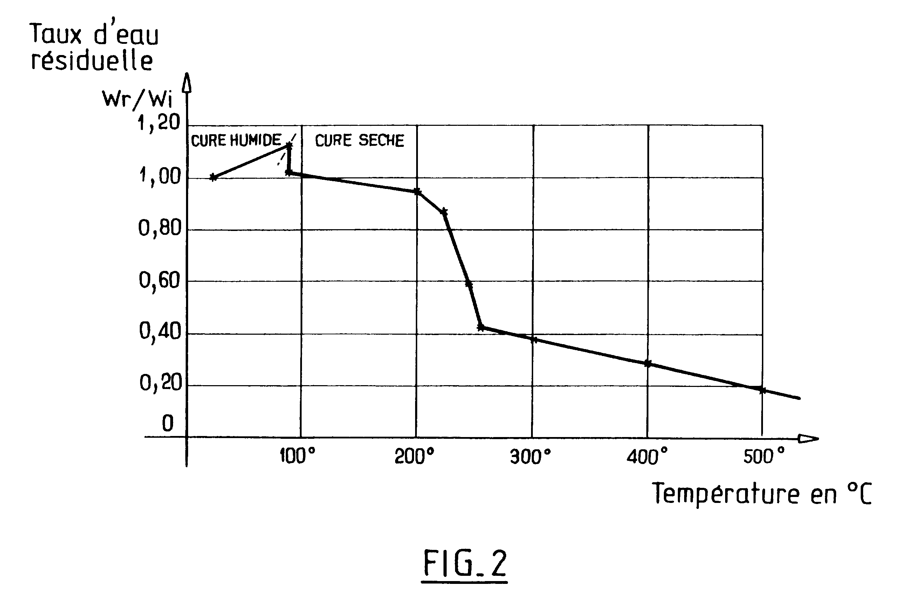

On cuit ces échantillons à différentes températures et on mesure la dessication des éprouvettes. On constate (fig. 2) que cette dessication augmente faiblement avec la température de cure jusqu'à 220°C et au-delà de 250°C, Par contre, cette dessication est intense aux environs de 230-240°C. Cette température correspond à la transformation des hydrates amorphes, semi-cristallins et de tobermorite en xonotlite.

Pour que cette transformation s'effectue complètement, il convient donc de cuire l'échantillon à une température égale ou supérieure à 250°C.

Les conditions de cure conduisent à exposer les copeaux d'acier à des conditions de haute température associée à une forte humidité. Malgré le confinement dans la matrice cimentaire, les copeaux d'acier ordinaire sont sévèrement corrodés. Les oxydes de fer résultant de cette corrosion sont visibles sur les parements de l'échantillon. Dans le cas d'utilisation d'acier inoxydable, la corrosion est beaucoup plus limitée et aucune trace de rouille n'apparaît sur le parement.

Les performances mécaniques du béton de l'invention peuvent être améliorées en appliquant à l'échantillon de béton frais, une pression de serrage comprise entre 5 et 50 MPa. Cette pression a pour objet de supprimer la porosité de l'échantillon due à l'air occlus, et de diminuer la teneur en eau du béton frais par essorage.

On observe par exemple, les résultats indiqués dans le tableau ci-après :

| **RESISTANCES A LA COMPRESSION** | | |
|---|---|---|
| | TEMPERATURE DE CURE | |
| | 250°C | 400°C |
| Echantillon standard | 488 MPa | 524 MPa |
| Echantillon comprimé pendant la prise | 631 MPa | 673 MPa |

Le béton traditionnel est caractérisé par sa résistance à 28 jours, mesurée sur cylindre. Les bétons courants ont des résistances en compression, comprises entre 25 et 45 MPa. Les bétons dits à haute performance ont des résistances de 50 à 60 MPa. Les bétons dits à très hautes performances ont des résistances qui peuvent dépasser légèrement 100 MPa.

Les résistances obtenues avec le béton de l'invention sont comprises entre 400 et 680 MPa.

Des essais en flexion trois points sur éprouvettes 4 x 4 x16 entaillées, ont permis de mesurer des énergies de fracturation allant de 1200 J/m² à 1800 J/m², alors que les bétons courants, les bétons à haute performance et les bétons à très hautes performances ont tous des énergies de fracturation inférieures à 150 J/m².

Des essais sur éprouvettes cylindriques de 7 cm de diamètre et 14 cm de hauteur, pressurisées et cuites à 400°C ont donnés les résultats ci-après :

| | |
|---|---|
| Résistance à la compression | 490 MPa à 680 MPa |
| Résistance à la traction (par flexion) | 45 MPa à 141 MPa |
| Energie de fracturation | 1200 J/m² à 2000 J/m² |
| Module de Young | 65 GPa à 75 GPa |

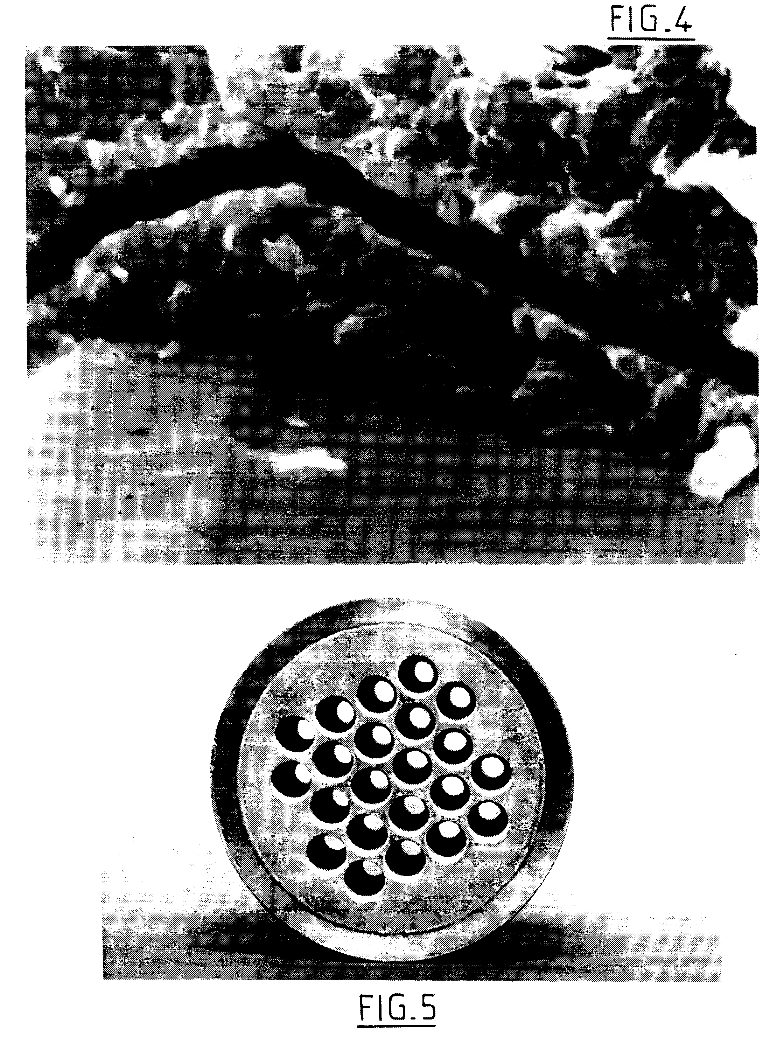

La fig. 4 est une micrographie au microscope à balayage électronique montrant la micro structure d'un béton préparé selon l'invention et qui présente une fracturation. On voit que cette dernière s'est produite à une certaine distance de l'interface pâte / aggrégat. Ceci illustre l'adhérence élevée à l'interface.

Le béton de l'invention permet de réaliser des pièces en remplacement de l'acier : tête d'ancrage de câbles de précontrainte, panneaux de protection contre les projectiles, etc.

### EXEMPLE II - Caractérisation par la mécanique de la rupture

La très haute résistance en traction du béton de l'invention est obtenue par ajout de fibres d'acier et par traitement thermique.

La caractérisation du matériau par la mécanique de la rupture nécessite la confection de corps d'épreuve prismatiques instrumentés qui sont soumis à des essais de flexion. La formulation utilisée pour la réalisation des éprouvettes est la suivante (en parties en poids) :

| | |
|---|---|
| Ciment Portland Type V | 1 |
| Microsilice de l'industrie du zirconium (diamètre moyen 0,5µm) | 0.23 |
| Quartz broyé (diamètre moyen 4micromètres) | 0.39 |
| Sable (diamètre max. 0.5 mm) | 0.5 |
| Laine d'acier (comme dans l'exemple I) | 0.25 |
| Fibres d'acier (longueur 12.5 mm, diamètre 0,150 mm) | 0,4 |
| Superplastifiant polyacrylate (extrait sec) | 0,02 |
| Eau | 0.21 |

Le mélange est réalisé dans un malaxeur de laboratoire à hautes performances. L'introduction des fibres et de la laine d'acier nécessitent une attention particulière. Les paquets de fibres forment des défauts majeurs dans le matériau, fragilisant la structure.

Le béton est compacté dans des moules prismatiques sur une table vibrant à la fréquence de 50 Hz. Les éprouvettes non comprimées nécessaires pour la caractérisation de la résistance en traction par flexion ont une dimension normalisée de 4 x 4 x 16 cm. les éprouvettes pour la caractérisation de l'énergie de fracturation de 7 x 7 x 28 cm. La dimension des éprouvettes prismatiques comprimées pendant la prise est de 3 x 3 x 12 cm. La pression appliquée est de 581 bars.

Les éprouvettes ont subi après le démoulage une cure à 90°C suivie d'une cure à 250°C.

La résistance en traction est mesurée par un essai de flexion en trois points.

L'énergie de fracturation est mesurée sur une éprouvette entaillée. L'essai nécessite la mesure de la flèche et de la force appliquée ce qui permet de déterminer la surface sous la courbe de contrainte-déformation correspondant à l'énergie de fracturation.

Les résultats mesurés sont résumés dans le tableau ci-dessous:

| | R_{f} [MPa] | G_{f} [J/m²] |
|---|---|---|
| Comprimé | 141 | 29 600 |
| Non comprimé | 108 | 25 400 |

### EXEMPLE III - Tête d'ancrage de câble de précontrainte

Des têtes d'ancrage de précontrainte 22T15 ont été réalisées en béton par coulage du béton selon l'invention dans une couronne conique extérieure en acier utilisée comme coffrage perdu (fig. 5).

Le béton utilisé pour ces têtes d'ancrage est composé des éléments suivants ;

| | |
|---|---|
| Ciment Portland Type V | 1 |
| Fumée de silice (diamètre moyen 0.7 micromètres) | 0,23 |
| Quartz broyé (diamètre moyen 10 micromètres) | 0,39 |
| Sable (diamètre moyen 0,25 mm) | 0,5 |
| Laine d'acier (comme dans l'exemple I) | 0,63 |
| Superplastifiant polyacrylate (extrait sec) | 0,26 |
| Eau | 0.21 |

Un malaxeur à hautes performances facilite la défloculation des éléments les plus fins introduits. La procédure de malaxage dure six minutes et se décompose en quatre phases principales :
0' Début de malaxage des composants secs, sans les fibres
1'30" Introduction de l'eau de gâchage et d'une moitié de l'adjuvant
2'30" Introduction de la seconde moitié de l'adjuvant
4' Introduction de la fibre
6' Fin de malaxage.

Le module métallique, composé du cylindre conique en acier, d'un fond de moule et des réservations tronconiques pour le passage des torons, est rempli de béton par vibration.

Le remplissage du moule est suivi d'une compression du béton frais qui est maintenue pendant le temps de prise du béton. La pression appliquée est de l'ordre de 500 bars.

Le démoulage de l'ancrage consiste à retirer le fond du moule et les pièces coniques utilisées pour les réservations. L'ancrage démoulé est soumis à un cycle de cure qui comprend un passage à 90°C, suivi d'un cycle à 250°C.

La résistance en compression mesurée sur des éprouvettes de contrôle réalisées en parallèle ont donné des résultats supérieur à 600 MPa avec un maximum à 673 MPa.

L'intérêt d'une tête d'ancrage de câble de précontrainte en béton selon l'invention est multiple ;
- une économie importante est réalisée sur l'usinage de la pièce conventionnelle en acier,
- le contact des clavettes de serrage est amélioré comparé aux solutions existantes,
- la masse totale de la tête d'ancrage est très inférieure à celle des ancrages traditionnels en acier, facilitant la mise en oeuvre sur chantier.

L'invention n'est pas limitée à ces exemples.

## Revendications

1. Procédé pour obtenir un béton ayant une résistance à la compression d'au moins 400 MPa et une énergie de fracturation d'au moins 1 000 J/m2, caractérisé en ce qu'il comporte les opérations consistant à malaxer un mélange comprenant les proportions suivantes, exprimées en parties en poids (p) :
a) 100 p. de ciment Portland,
b) 30 à 100 p., ou mieux 40 à 70 p., de sable fin ayant une grosseur de grains d'au moins 150 micromètres,
c) 10 à 40 p. ou mieux 20 à 30 p. de silice amorphe ayant une grosseur de grains inférieure à 0,5 micromètres,
d) 20 à 60 p. ou mieux 30 à 50 p., de quartz broyé ayant une grosseur de grains inférieure à 10 micromètres,
e) 25 à 100 p., ou mieux 45 à 80 p. de laine d'acier,
f) un fluidifiant,
g) éventuellement d'autres adjuvants,
h) 13 à 26 p., ou mieux 15 à 22 p., d'eau
et après la prise du mélange, à cuire le béton à une température d'au moins 250° C pendant un laps de temps suffisant pour transformer les produits d'hydratation du ciment en hydrates cristallins de type xonotlite, de façon à éliminer la quasi-totalité de l'eau libre et au moins la majeure partie de l'eau adsorbée et chimiquement liée.

2. Un procédé selon la revendication 1, caractérisé en ce que le sable fin a une grosseur de grain inférieur à 800 micromètres.

3. Un procédé selon la revendication 2, caractérisé en ce que le sable fin a une grosseur de grain dans la gamme 150-400 micromètres.

4. Procédé selon l'une des revendications 1 à 3, caractérisé en ce qu'on utilise une laine d'acier constituée de copeaux d'acier broyés de 1 à 5 mm (taille de la grille de coupe au broyeur).

5. Procédé selon l'une des revendications 1 et 4, caractérisé en ce qu'on utilise une laine d'acier inoxydable.

6. Procédé selon la revendication 5, caractérisé en ce que ledit mélange contient au moins 0,6 p., ou mieux au moins 1.4 p en poids d'un superplastifiant.

7. Un procédé selon l'une des revendications 1 à 6, caractérisé en ce que l'on incorpore au mélange des fibres métalliques cylindriques et lisses ayant une longueur de 4 à 20 mm, de préférence 10 à 14 mm, et un diamètre inférieur à 500 micromètres, de préférence dans la gamme 100-200 micromètres, le volume de ces fibres étant 1 à 4%, ou mieux 2 à3% du volume du béton après la prise.

8. Procédé selon l'une des revendications 1 à 7, caractérisé en ce que ledit mélange contient sensiblement (en poids), pour 100 p. de ciment Portland. 50 p. de sable, 23 p. de silice, 39 p de quartz 2p. de superplastifiant, 63 p. de laine d'acier, 18 p. d'eau.

9. Procédé selon l'une des revendications 1 à 8, caractérisé en ce qu'on cure le béton à une température au moins égale à 250°C, ou mieux au moins égale à 400°C, à la pression ambiante et à l'hygrométrie ambiante.

10. Procédé selon l'une des revendications 1 à 9, caractérisé en ce que l'on soumet le béton frais pendant la prise à une pression d'au moins 5 MPa, ou mieux, d'au moins 50 MPa.

11. Les mélanges pour préparer un béton, tels que définis dans l'une des revendications 1 à 8.

12. Les éléments en béton préparés par un procédé selon l'une des revendications 1 à 10.

## Patentansprüche

1. Verfahren zur Herstellung eines Betons, der einem Druck von mindestens 400 MPa und einer Bruchenergie von mindestens 100 J/m² widerstehen kann, gekennzeichnet durch die folgenden Schritte: Gründliches Durchmischen einer Mischung mit den folgenden in Gewichtsteilen (p) angegebenen Bestandteilen:
(a) 100 p Portlandzement
(b) 30 bis 100 p, vorzugsweise 40 bis 70 p Feinsand mit einer Korngröße von mindestens 150µm
(c) 10 bis 40 p, vorzugsweise 20 bis 30 p amorphe Kieselerde mit einer Korngröße unter 0,5µm
(d) 20 bis 60 p, vorzugsweise 30 bis 50 p gemahlener Quarz mit einer Korngröße unter 10µm
(e) 25 bis 100 p, vorzugsweise 45 bis 80 p Stahlwolle,
(f) einen Verflüssiger
(g) eventuell weitere Zuschlagsstoffe,
(h) 13 bis 26 p, vorzugsweise 15 bis 22 p Wasser
und nach dem Abbinden der Mischung Härten des Betons bei einer Temperatur von mindestens 250°C während einer Zeitspanne, die ausreicht, um die Hytratationsprodukte des Zementes in kristalline Hydrate des Xonotlit-Typs umzuwandeln, derart, daß das freie Wasser fast völlig und mindestens der größte Teil des absorbierten und chemisch gebundenen Wassers eleminiert wird.

2. Verfahren nach Anspruch 1, dadurch gekennzeichnet, daß der Feinsand eine Korngröße unter 800µm hat.

3. Verfahren nach Anspruch 2, dadurch gekennzeichnet, daß der Feinsand eine Korngröße im Bereich von 150 bis 400µm hat.

4. Verfahren nach einem der Ansprüche 1 bis 3, dadurch gekennzeichnet, daß man eine Stahlwolle verwendet, die aus gemahlenen Stahlspänen von 1 bis 5 mm besteht (Größe des Schneidegitters des Mahlwerkes).

5. Verfahren nach einem der Ansprüche 1 und 4 dadurch gekennzeichnet, daß man eine Wolle aus rostfreiem Stahl verwendet.

6. Verfahren nach Anspruch 5, dadurch gekennzeichnet, daß die Mischung mindestens 0,6 p, vorzugsweise 1,4 p eines Superplastifizierungsmittels enthält.

7. Verfahren nach einem der Ansprüche 1 bis 6, dadurch gekennzeichnet, daß man in die Mischung glatte zylindrische Metallfasern mit einer Länge von 4 bis 20 mm, vorzugsweise 10 bis 14 mm und einem Durchmesser von weniger als 500µm, vorzugsweise im Bereich von 100 bis 200µm gibt, wobei das Volumen dieser Fasern zwischen 1 bis 4 %, vorzugsweise 2 bis 3 % des Betons nach dem Abbinden hat.

8. Verfahren nach einem der Ansprüche 1 bis 7, dadurch gekennzeichnet, daß die Mischung (in Gewichtsteilen) für 100 p Portlandzement im wesentlichen 50 p Sand, 23 p Kieselerde, 39 p Quarz, 2 p Superplastifizierungsmittel, 63 p Stahlwolle und 18 p Wasser enthält.

9. Verfahren nach einem der Ansprüche 1 bis 8, dadurch gekennzeichnet, daß man den Beton bei einer Temperatur von mindestens 250°C vorzugsweise bei einer Temperatur von 400°C bei Umgebungsdruck und Umgebungsfeuchtigkeit härtet.

10. Verfahren nach einem der Ansprüche 1 bis 9, dadurch gekennzeichnet, daß man den frischen Beton während des Abbindens einem Druck von mindestens 5 MPa, vorzugsweise mindestens 50 MPa aussetzt.

11. Mischung zur Herstellung eines Betons gemäß den Definitionen in einem der Ansprüche 1 bis 8.

12. Betonelemente, hergestellt gemäß einem Verfahren nach einem der Ansprüche 1 bis 10.

## Claims

1. A method of obtaining a concrete having compressive strength of not less than 400 MPa and fracture energy of not less than 1,000 J/m², characterized in that it includes operations consisting in mixing a mixture comprising the following proportions expressed in parts by weight (p):
a) 100 p of Portland cement;
b) 30 p to 100 p or better 40 p to 70 p of fine sand having a grain size of not less than 150 micrometers;
c) 10 p to 40 p or better 20 p to 30 p of amorphous silicon having a grain size of less than 0.5 micrometers;
d) 20 p to 60 p or better 30 p to 50 p of ground quartz having a grain size of less than 10 micrometers;
e) 25 p to 100 p, or better 45 p to 80 p of steel fibers;
f) a thinning agent;
g) optionally other additives;
h) 13 p to 26 p or better 15 p to 22 p of water;
and, once the mixture has set, the concrete is cured at a temperature of not less than 250°C for a period of time sufficient to transform the cement hydration products into crystalline hydrates of the xonotlite type, so as to eliminate substantially all of the free water, and so as to eliminate at least the major part of the absorbed and chemically bonded water.

2. A method according to claim 1, characterized in that the fine sand has a grain size less than 800 micrometers.

3. A method according to claim 2, characterized in that the fine sand has a grain size in the range 150 micrometers to 400 micrometers.

4. A method according to any one of claims 1 to 3, characterized in that a steel fiber is used constituted by steel chips ground to 1 mm to 5 mm (size of the cutting grid of the grinder).

5. A method according to claim 1 or 4, characterized in that a stainless steel fiber is used.

6. A method according to claim 5, characterized in that said mixture contains not less than 0.6 p, or better still not less than 1.4 p by weight of a superplasticizer.

7. A method according to any one of claims 1 to 6, characterized in that smooth cylindrical metal fibers are incorporated in the mixture, said fibers having a length in the range 4 mm to 20 mm, and preferably in the range 10 mm to 14 mm, and a diameter less than 500 micrometers, and preferably in the range 100 micrometers to 200 micrometers, and the volume of said fibers lying in the range 1% to 4%, or better in the range 2% to 3% of the volume of the concrete after setting.

8. A method according to any one of claims 1 to 7, characterized in that said mixture substantially contains (by weight), per 100 p of Portland cement: 50 p of sand, 23 p of silica, 39 p of quartz, 2 p of super plasticizer, 63 p of steel fibers, and 18 p of water.

9. A method according to any one of claims 1 to 8, characterized in that the concrete is cured to a temperature of not less than 250°C, or better to a temperature of not less than 400°C, at ambient pressure and at ambient humidity.

10. A method according to any one of claims 1 to 9, characterized in that the fresh concrete is subjected, while setting, to a pressure of not less than 5 MPa, or better to a pressure of not less than 50 MPa.

11. Mixtures for preparing concrete, as defined in any one of claims 1 to 8.

12. Concretes elements prepared by a method according to any one of claims 1 to 10.
